# EUROPÄISCHE PATENTSCHRIFT

(11) **EP 0 918 621 B1**
(45) Veröffentlichungstag und Bekanntmachung des Hinweises auf die Patenterteilung: **24.10.2001**
(21) Anmeldenummer: 97922947.3
(22) Anmeldetag: 02.05.1997
(51) Int. Cl.: B29C 71/00, B60S 1/38, C08J 7/12

(54) **VERFAHREN ZUR HERSTELLUNG VON WISCHGUMMIS FÜR SCHEIBENWISCHER**
PROCESS FOR PRODUCING WINDSCREEN WIPER BLADES
PROCEDE POUR LA FABRICATION DE LAMES CAOUTCHOUC D'ESSUIE-GLACE

(30) Priorität: 21.05.1996 DE 19620354
(43) Veröffentlichungstag der Anmeldung: 02.06.1999
(73) Patentinhaber: Valeo Auto-Electric Wischer und Motoren GmbH, 74321 Bietigheim-Bissingen (DE)
(72) Erfinder: LÖSCH, Manfred, D-74321 Bietigheim-Bissingen (DE); HOFFMANN, Paul, D-74369 Löchgau (DE); LAY, Reiner, D-74343 Sachsenheim (DE)
(74) Vertreter: Dreiss, Fuhlendorf, Steimle & Becker
(86) Internationale Anmeldenummer: EP9702260
(87) Internationale Veröffentlichungsnummer: WO9744184

(56) Entgegenhaltungen:
- EP-A- 0 470 690
- DE-A- 3 904 152
- US-A- 2 132 268
- US-A- 3 035 297
- US-A- 3 997 935
- US-A- 4 539 185
- INTERNATIONAL POLYMER SCIENCE AND TECHNOLOGY, Bd. 20, Nr. 3, 1.Januar 1993, SHAWBURY GB, Seiten T07-T13, XP000382017 KOGURE Y: "IMPROVEMENT OF SURFACE CONDITION AND PROPERTIES OF VULCANISED RUBBER (SURFACE TREATMENT OF WIPER BLADES FOR VEHICLES)"

## Beschreibung

Die Erfindung bezieht sich auf ein Verfahren zur Herstellung von Wischgummis für Scheibenwischer, insbesondere für Fahrzeugscheibenwischer, wobei die Wischgummis durch Ablängen von einem endlos extrudierten Wischgummiprofilstrang erzeugt und einer naßchemischen Behandlung unterzogen werden, gemäß den Merkmalen des Oberbegriffs des Anspruchs 1.

Die chemische Nachbehandlung von Scheibenwischergummi ist ein wichtiger Bestandteil in der Fertigungskette zur Herstellung von Wischblättern. Abhängig von der Rezeptur der Gummimischung erlaubt die chemische Nachbehandlung eine gezielte Veränderung der Oberflächeneigenschaften des Wischgummis. Unter anderem wird die Abriebfestigkeit der Gummiteile verbessert. Weiterhin hat die chemische Nachbehandlung Einfluß auf die nachfolgende Fertigungsstufe des Gummischneidens, wobei zwei Wischgummiprofile, die in einem Rohling noch mit ihren wischlippen zusammenhängen, in Längsrichtung auseinandergeschnitten werden, wobei die Wischkanten der Wischgummis gebildet werden. Der Intensität der chemischen Nachbehandlung entsprechend variiert die Qualität des Schnittes und somit die Qualität des beim Betrieb der Scheibenwischervorrichtung von den Wischgummis erzielten Wischbildes.

Zum Zweck der chemischen Nachbehandlung von Wischgummiprofil werden in der Automobil-Zulieferindustrie verschiedene naßchemische Prozesse auf Halogenbasis eingesetzt. Bei diesen naßchemischen Nachbehandlungsprozessen wird hinsichtlich dem Applikationsprozeß in Spritzverfahren und Tauchverfahren unterschieden, wobei für großtechnische Anwendungen wegen verschiedener technischer Nachteile der Spritzverfahren nur die Tauchverfahren von Interesse sind.

In der DE 39 04 152 A1 wird u.a. angeführt, daß es bekannt ist, bei Gummiwischleisten zur Herabsetzung der Reibung das extrudierte oder aus einem Rohling formgepreßte und dann vulkanisierte Gummiteil einer Halogenbehandlung zu unterziehen, indem es in ein Chlorbad oder ein Brombad eingetaucht wird. Derartige naßchemische Nachbehandlungsverfahren für Wischgummirohlinge, die auch in der Praxis verbreitet Anwendung finden, sind diskontinuierlich arbeitende Verfahren, bei denen taktweise eine Charge von Wischgummirohlingen in entsprechenden Anlagen behandelt wird, welche aus einer Reihe von entsprechenden Behandlungsbehältern bestehen.

Obwohl inzwischen die Herstellung endloser Wischgummiprofilstränge im kontinuierlichen Extrusionsverfahren bekannt ist und auch in der Praxis bereits angewendet wird, erfolgt die naßchemische Nachbehandlung von Wischgummiprofilen bzw. Rohlingen noch immer mit diskontinuierlich arbeitenden Verfahren bzw, in Taktanlagen. Im Extrusionsverfahren hergestellte Wischgummiprofilstränge werden vor der naßchemischen Nachbehandlung in Wischgummiprofile entsprechender Länge zerteilt, welche dann in Losen der chemischen Nachbehandlung zugeführt werden. Einer derartigen diskontinuierlichen Verfahrensweise, bei welcher zahlreiche manuelle Handlingsschritte erforderlich sind, mangelt es inzwischen an der heutzutage erforderlichen Wirtschaftlichkeit. Außerdem sind bei dem bekannten diskontinuierlich arbeitenden naßchemischen Nachbehandlungsverfahren häufig Qualitätsschwankungen der behandelten Gummioberfläche zu beobachten, welche beispielsweise durch ungleichmäßige Benetzungen und durch ungenügenden Stoffaustausch infolge mangelnder Umspülung der Gummioberfläche des Wischgummiprofiles und damit durch Schwankungen in der Behandlungsintensität entstehen.

Aus der US-A-4,539,185 ist ein kontinuierliches Extrusionsverfahren von Scheibenwischergummis bekannt, wobei der Profilstrang im direkten Anschluß an das Extrusionsverfahren einer chemischen Nachbehandlung unterzogen wird. Aus der EP-A-0 470 690 ist ebenfalls ein kontinuierliches Herstellungsverfahren bekannt geworden.

Aufgabe der Erfindung ist es nunmehr, die Wirtschaftlichkeit bei der Herstellung von Wischgummis für Scheibenwischer bei verbesserter Qualität der hergestellten Wischgummis zu verbessern.

Erfindungsgemäß wird diese Aufgabe durch ein Verfahren zur Herstellung von Wischgummis für Scheibenwischer, insbesondere für Fahrzeugscheibenwischer, mit den Merkmalen des Anspruchs 1 gelöst. Dadurch, daß das Verfahren nunmehr kontinuierlich arbeitet und eine kontinuierliche naßchemische Nachbehandlung des kontinuierlich hergestellten endlosen Wischgummiprofilstranges vor dessen Ablängung zu den einzelnen Wischgummis einschließt, werden die eingangs genannten Nachteile beseitigt. Der manuelle Aufwand gegenüber den bei diskontinuierlich arbeitenden Verfahren üblichen manuellen Handlingsprozessen entfällt, wodurch die Wirtschaftlichkeit des erfindungsgemäßen Verfahrens verbessert wird. Durch das kontinuierliche Hindurchführen des vom Extruder kommenden endlosen Wischgummiprofilstranges durch die nachgeschalteten wäßrigen Behandlungszonen sowie Trocknungszonen wird außerdem eine Qualitätsverbesserung der hergestellten Wischgummis erreicht, weil die eingangs genannten Nachteile beseitigt worden sind.

Vorteilhafte Weiterbildungen der Erfindung ergeben sich aus den Unteransprüchen und deren Kombinationen. Aufgrund der kontinuierlichen Arbeitsweise des erfindungsgemäßen Verfahrens, insbesondere der naßchemischen Nachbehandlung, wird die Möglichkeit geschaffen, die gesamte Gummioberfläche des endlos hergestellten wischgummiprofilstranges nahezu konstant mit gleichen Prozeßparametern zu behandeln. Dabei wird der Wischgummiprofilstrang durch ein Bad einer wäßrigen Halogenlösung gezogen. Die Länge der Behandlungszone in Kombination mit der Fördergeschwindigkeit und der Halogenkonzentration beeinflußt die Behandlungszeit und damit die Behandlungsintensität. Da andererseits Brom wie eine Flüssigkeit zu handhaben ist, kann es auf einfache Weise dem aus einer wäßrigen Bromlösung bzw. einem Brom-Wasser-Gemisch bestehenden Behandlungsbad zudosiert werden. Darüberhinaus wird der Wischgummiprofilstrang im Anschluß an die naßchemische Halogenbehandlung kontinuierlich an einer automatisch, und vorzugsweise auf Basis der Röntgenfluoreszenz, arbeitenden Meßeinrichtung vorbeigeführt, welche kontinuierlich die Qualität, d.h. die Intensität der Halogenierung an der Gummioberfläche mißt. Schwankungen in der Gummiqualität hinsichtlich einer stärkeren bzw. geringeren Affinität zu dem Halogen können somit meßtechnisch erfaßt werden, und die gewonnenen Meßsignale können wiederum als Regelsignale für die naßchemische Halogenbehandlung weiterverarbeitet werden. Bei einer Überhalogenisierung wird die Behandlungszeit verkürzt und/oder die Konzentration des Halogenisierungsbades durch Einleiten von Wasser verringert. Bei einer festgestellten Unterhalogenisierung wird die Behandlungszeit verlängert und/oder die Konzentration des Halogenisierungsbades durch Einleitung des betreffenden Halogens erhöht, wobei hierbei wiederum die Verwendung von Brom von besonderem Vorteil ist.

Auch aus Umweltgesichtspunkten besitzt die kontinuierliche naßchemische Nachbehandlung deutliche Vorteile gegenüber der naßchemischen Nachbehandlung in Taktanlagen. Das für die Behandlung erforderliche Flüssigkeitsvolumen wird deutlich verringert. Hierdurch wird die Menge an umweltschädigenden Produktionsstoffen (Wasser-Halogengemisch) reduziert, was zu einer Entlastung der Umwelt führt. Außerdem wird das bei der naßchemischen Nachbehandlung in Taktanlagen zu beobachtende Abdunsten während des Herausfahrens der behandelten Charge aus der Halogenbadlösung bei dem erfindungsgemäßen kontinuierlichen Verfahren deutlich verringert, da der extrudierte Wischgummiprofilstrang unmittelbar im Anschluß an das naßchemische Halogenisierungsbad kontinuierlich durch eine Spülvorrichtung geführt werden kann.

Vorteilhaft ist weiterhin, daß durch die kontinuierliche Verfahrensweise die Möglichkeit geschaffen ist, den extrudierten Wischgummigrofilstrang vor dem Ablängen zu den einzelnen Wischgummis kontinuierlich durch einen Beschichtungsprozeß bzw. eine Beschichtungsvorrichtung zu führen, in welcher mittels Spritz- oder Tauchapplikation der Wischgummiprofilstrang kontinuierlich mit einem reibungsverminderten Material, vorzugsweise mit einem speziell hierfür geeigneten Gleitlack, beschichtet wird. Diese Option führt zu einer weiteren Verbesserung der Wirtschaftlichkeit der Herstellung von Wischgummis für Scheibenwischer, wobei gleichzeitig der umweltschädigende Einfluß der kontinuierlichen Gleitlackbeschichtung gegenüber der bekannten diskontinuierlichen Verfahrensweise deutlich verringert wird.

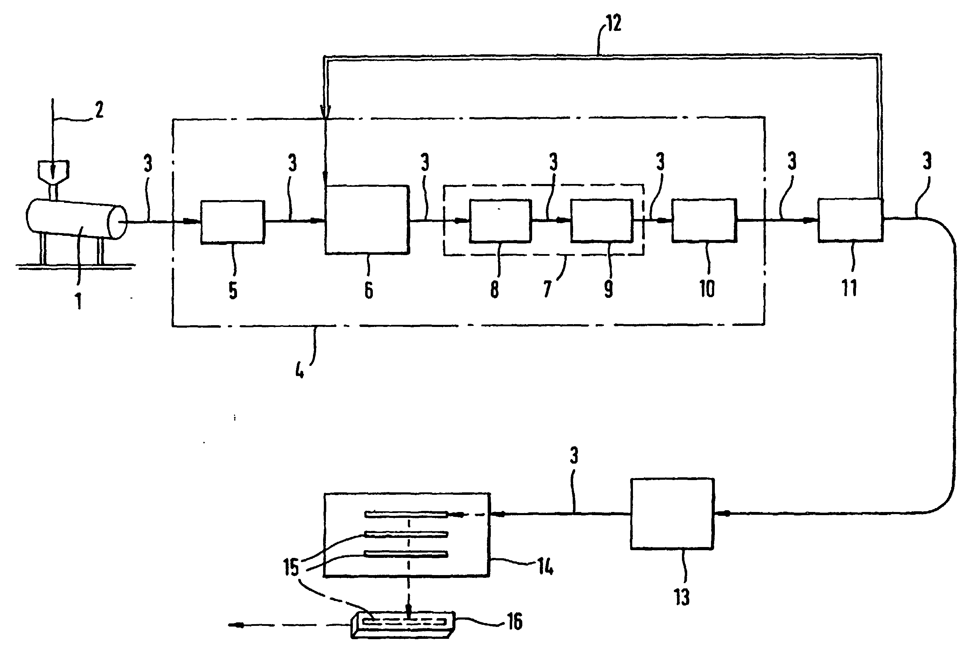

Anhand eines Ausführungsbeispieles wird nachfolgend die Erfindung näher erläutert. Die zugehörige Zeichnung zeigt in
- Fig. 1: in schematischer Darstellung den Ablauf eines kontinuierlich arbeitenden Verfahrens zur Herstellung von Wischgummis für Kraftfahrzeugscheibenwischer.

In Fig. 1 ist links oben schematisch ein Extruder 1 dargestellt. In diesem Extruder 1 wird Rohgummi 2 zu einem Wischgummiprofilstrang 3 extrudiert, der endlos und kontinuierlich aus dem Extruder 1 austritt. Im direkten Anschluß an den Extruder 1 arbeitet die naßchemische Nachbehandlung 4, die der Wischgummiprofilstrang 3 kontinuierlich durchläuft. Die naßchemische Nachbehandlung 4 ist in Fig. 1 als großes Rechteck mit Strichpunktlinie dargestellt. Es ist zu erkennen, daß die naßchemische Nachbehandlung 4 dem Extruder 1 in Reihe nachgeschaltete wäßrige Behandlungszonen sowie Trocknungszonen einschließt. Zuerst wird der vom Extruder 1 kommende Wischgummiprofilstrang 3 beim kontinuierlichen Durchlauf in der Behandlungszone der Vorspülung 5 gereinigt, bevor er in die sich anschließende Behandlungszone der naßchemischen Halogenisierung in Form einer naßchemischen Bromierung 6 gelangt und diese ebenfalls kontinuierlich durchläuft. Während des kontinuierlichen Durchlaufes der naßchemischen Bromierung wird der Wischgummiprofilstrang 3 vollständig in ein Bromierungsbad eingetaucht, welches von einer wäßrigen Bromlösung gebildet wird. Der wesentliche Vorteil beim Einsatz des Halogens Brom zur Halogenisierung des Wischgummis gegenüber beispielsweise dem Halogen Chlor resultiert aus dem flüssigen Aggregatzustand des Broms bei Verarbeitungstemperatur und seiner höheren Löslichkeit im Wasser.

Durch seine Eigenschaft, in flüssiger Form einsetzbar zu sein, besitzt Brom viele Vorteile bei seiner Handhabung und ist weniger riskant bei Arbeitsunfällen. Seine rotbraune Farbe ermöglicht z.B. eine schnellere Lokalisierung von Lekkagen an der Anlage. In Wasser gelöstes Chlor besitzt im Vergleich zu Brom einen höheren Dampfdruck. Das bedeutet, daß bei gleichen äußeren Bedingungen mehr Chlor in die Gasphase übergeht als Bromdampf entsteht. Deshalb müßte beim Einsatz von Chlor gegenüber Brom ein wesentlich größerer anlagentechnischer Aufwand für die Abluftreinigung betrieben werden. Außerdem ist beim Einsatz von Chlor die Gefahr einer Gefährdung der Umgebung durch austretende Halogengasdämpfe bei Ausfall des Abluftwäschers wesentlich höher als beim Einsatz von Brom.

Beim kontinuierlichen Durchlauf der naßchemischen Bromierung 6 wird der Wischgummiprofilstrang 3 komplett in die wäßrige Bromlösung eingetaucht. Um einen kontinuierlichen Prozeß der naßchemischen Bromierung 6 zu gewährleisten, wird die Bromkonzentration des Bromierungsbades konstant gehalten. Während der naßchemischen Bromierung 6 greift das Brom die Gummioberfläche des Wischgummiprofilstranges 3 an, und es bildet sich eine bromierte Gummioberfläche, deren Materialeigenschaften sich in Abhängigkeit von der Bromierungsintensität unterscheiden. Am Ende der Behandlungszeit wird der Wischgummiprofilstrang 3 aus der Behandlungsflüssigkeit ausgetaucht und durchläuft nachfolgend kontinuierlich die Behandlungszone einer Spülung 7. Diese mit gestrichelt gezeichnetem Rechreck dargestellte Behandlungszone der Spülung 7 ist nochmals untergliedert in eine alkalische Spülung 8 und eine Nachspülung 9. Durch die alkalische Spülung 8 werden Reste vom Brom reduziert, welche auf dem Wischgummiprofilstrang 3 haftengeblieben sind. In der anschließenden Nachspülung 9 werden dann die dem Wischgummiprofilstrang 3 noch anhaftenden Reste der alkalischen Spülflüssigkeit entfernt. Nach diesen Naßprozeßstufen wird der Wischgummiprofilstrang 3 noch durch eine Trocknungszone 10 geführt und damit von anhaftender Feuchtigkeit befreit. Damit ist der kontinuierliche Prozeß der naßchemischen Nachbehandlung 4 des Wischgummiprofilstranges 3 abgeschlossen.

Durch die Entwicklung des kontinuierlich arbeitenden naßchemischen Nachbehandlungsverfahrens ist nunmehr die Oberflächenqualität des durch Gummiextrusion hergestellten Wischgummiprofilstranges 3 zu einer kontinuierlich meßbaren Größe geworden. Deshalb ist, wie aus Fig. 1 ersichtlich, der naßchemischen Nachbehandlung 4 bzw. deren abschließenden Trocknungszone 10 eine Meßeinrichtung 11 nachgeschaltet, welche der oberflächenbehandelte Wischgummiprofilstrang 3 kontinuierlich passiert. Der Sensor der Meßeinrichtung 11 mißt kontinuierlich die Intensität der vorhergehend erfolgten Bromierung. Das in der Meßeinrichtung 11 auf Basis der Röntgenfluoreszenzanalyse gewonnene Meßsignal wird kontinuierlich als Regelsignal 12 für die naßchemische Nachbehandlung 4 bzw. für die naßchemische Bromierung 6 verarbeitet und der entsprechenden Prozeßstufe zugeführt. Stellt die Meßeinrichtung 11 Abweichungen von einem vorgegebenen Sollwert fest, erfolgt umgehend eine automatische Veränderung der betreffenden Prozeßparameter, d.h. in Abhängigkeit von der gemessenen Bromintensität auf der Gummioberfläche des Wischgummiprofilstranges 3 wird die Bromierzeit verkürzt oder verlängert. Anstelle einer Verkürzung oder Verlängerung der Bromierzeit kann auch die Konzentration der wäßrigen Bromierungslösung des naßchemischen Bromierungsbades durch Zuführen von Brom oder von Wasser entweder erhöht oder verringert werden. Ebenso besteht die Möglichkeit, die erforderliche Veränderung durch eine Kombination der Veränderung der Bromierzeit und der Veränderung der Konzentration der wäßrigen Bromierungslösung herbeizuführen.

In der Praxis ist es üblich, die Produkteigenschaften der Wischgummis, insbesondere deren Gleitfähigkeit auf der zu wischenden Scheibe, noch weiter zu verbessern, wofür allgemein eine Beschichtung mit einem dafür geeigneten Gleitlack angewendet wird. Deshalb ist in Fig. 1 nach der Meßeinrichtung 11 eine Beschichtungszone 13 vorgesehen, welche der Wischgummiprofilstrang 3 durchläuft und dabei mittels einer geeigneten Spritz- oder Tauchapplikation kontinuierlich mit einem geeigneten Gleitlack beschichtet wird.

Nun ist die Nachbehandlung des durch Extrusion endlos hergestellten Wischgummiprofilstranges 3 abgeschlossen. Deshalb gelangt der Wischgummiprofilstrang 3 in eine Ablängeinrichtung 14, um zu den einzelnen fertigen Wischgummis 15 abgelenkt zu werden. In entsprechende Verpackungen 16 gebracht, können die einzelnen Wischgummis 15 ausgeliefert werden.

## Patentansprüche

1. Verfahren zur Herstellung von Wischgummis für Scheibenwischer, insbesondere für Fahrzeugscheibenwischer, wobei die Wischgummis durch Ablängen von einem endlos extrudierten Wischgummiprofilstrang erzeugt und einer naßchemischen Nachbehandlung unterzogen und die naßchemische Nachbehandlung (4) im direkten Anschluß an das Extrusionsverfahren arbeitet, wobei der vom Extruder (1) kommende Wischgummiprofilstrang (3) in einer dem Extrusionsverfahren nachgeschalteten Behandlungszone kontinuierlich einer naßchemischen Nachbehandlung auf Halogenbasis unterzogen wird und dabei mit einer wäßrigen Halogenlösung behandelt wird, insbesondere mit einer wäßrigen Bromlösung bzw. mit einem Brom-Wasser-Gemisch, wobei der vom Extruder (1) kommende, endlos hergestellte Wischgummiprofilstrang (3) kontinuierlich durch dem Extrusionsverfahren in Reihe nachgeschaltete wäßrige Behandlungszonen sowie Trocknungszonen geführt wird, und daß das Ablängen zu den einzelnen Wischgummis (15) erst nach dem Durchlaufen der naßchemischen Nachbehandlung (4) erfolgt, **dadurch gekennzeichnet, daß** der Wischgummiprofilstrang (3) im Anschluß an die naßchemische Nachbehandlung (4) kontinuierlich eine Meßeinrichtung (11) passiert, welche, vorzugsweise auf Basis der Röntgenfluoreszenz arbeitend, kontinuierlich die Intensität der Halogenierung an der Gummioberfläche mißt.

2. Verfahren nach Anspruch 1, **dadurch gekennzeichnet, daß** der endlos extrudierte Wischgummiprofilstrang (3) in einer dem Extrusionsverfahren nachgeschalteten Behandlungszone kontinuierlich durch ein Bad aus einer wäßrigen Nachbehandlungsflüssigkeit auf Halogenbasis, insbesondere aus einer wäßrigen Bromlösung bzw. einem Brom-Wasser-Gemisch, geführt und dabei vollständig in das Bad eingetaucht wird.

3. Verfahren nach einem der vorhergehenden Ansprüche, **dadurch gekennzeichnet, daß** das Meßsignal der Meßeinrichtung (11) als Regelsignal (12) für den naßchemischen Nachbehandlungsprozeß verarbeitet wird.

4. Verfahren nach Anspruch 3, **dadurch gekennzeichnet, daß** in Abhängigkeit von dem in der Meßeinrichtung (11) gewonnenen Meßsignal die Dauer der naßchemischen Nachbehandlung (4) und/oder die Konzentration der naßchemischen Nachbehandlungsflüssigkeit verändert wird.

5. Verfahren nach einem der vorhergehenden Ansprüche, **dadurch gekennzeichnet, daß** der endlos extrudierte Wischgummiprofilstrang (3) nach dem Durchlaufen der naßchemischen Nachbehandlung (4) und nach dem Passieren der Meßeinrichtung (11) zur Analyse der Nachbehandlungsqualität kontinuierlich durch eine Beschichtungszone (13) geführt wird, in welcher der Wischgummiprofilstrang (3), bevor er zu den einzelnen, fertigen Wischgummis (15) abgelängt wird, kontinuierlich mittels Spritz- oder Tauchapplikation mit einem reibungsmindernden Material, insbesondere einem Gleitlack, beschichtet wird.

## Claims

1. Process for producing wiper blades for windscreen wipers, in particular for vehicle windscreen wipers, wherein the wiper blades are produced by cutting sections from a continuously extruded wiper blade profiled strand and are then subjected to a wet chemical post-treatment and the wet chemical post-treatment (4) works directly after the extrusion process, wherein the wiper blade profiled strand (3) coming from the extruder (1) is continuously subjected to a wet chemical post-treatment based on halogen in a treatment zone downstream from the extrusion process and is treated, in this process, with an aqueous halogen solution, in particular with an aqueous bromine solution or with a bromine/water mixture, wherein the continuously produced wiper blade profiled strand (3) coming from the extruder (1) is guided continuously through aqueous treatment zones connected in series downstream from the extrusion process, and drying zones, and in that the cutting of sections to form the individual wiper blades (15) only takes place after passing through the wet chemical post-treatment (4), **characterised in that** the wiper blade profiled strand (3) continually passes a measuring device (11) after the wet chemical post-treatment (4), which measuring device (11) preferably working on the basis of X-ray fluorescence, continuously measures the intensity of the halogenation on the blade surface.

2. Process according to claim 1, **characterised in that** the continuously extruded wiper blade profiled strand (3) is continuously guided through a bath of an aqueous post-treatment liquid based on halogen, in particular of an aqueous bromine solution or a bromine-water mixture in a treatment zone downstream from the extrusion process and, in the process, is completely immersed in the bath.

3. Process according to one of the preceding claims, **characterised in that** the measuring signal of the measuring device (11) is processed as a control signal (12) for the wet chemical post-treatment process.

4. Process according to claim 3, **characterised in that**, as a function of the measuring signal obtained in the measuring device (11), the duration of the wet chemical post-treatment (4) and/or the concentration of the wet chemical post-treatment liquid is changed.

5. Process according to any one of the preceding claims, **characterised in that** the continuously extruded wiper blade profiled strand (3) is continuously guided through a coating zone (13) after passing through the wet chemical post-treatment (4) and passing the measuring device (11) for analysing the post-treatment quality, in which coating zone (13) the wiper blade profiled strand (3) is continuously coated by spraying or immersion application with a friction reducing material, in particular a sliding lacquer, before it is cut into sections to form the individual, finished wiper blades (15).

## Revendications

1. Procédé pour fabriquer des raclettes en caoutchouc d'essuie-glaces notamment pour des essuie-glaces de véhicules, selon lequel on forme les raclettes de caoutchouc en mettant à longueur un cordon profilé de raclette en caoutchouc extrudé sans fin, et on les soumet à un traitement chimique complémentaire par voie humide, et on exécute le traitement chimique complémentaire par voie humide directement à la suite du procédé d'extrusion, et selon lequel on soumet d'une manière continue le cordon profilé de raclette en caoutchouc (3), qui est délivré par l'extrudeuse (1), à un traitement chimique complémentaire par voie humide en utilisant un halogène, dans une zone de traitement en aval du procédé d'extrusion, et on les traite avec une solution aqueuse d'un halogène, notamment avec une solution aqueuse de brome ou avec un mélange brome-eau, et selon lequel on guide continûment le cordon profilé de raclette en caoutchouc (3) arrivant de l'extrudeuse (1) et fabriqué sans fin, dans des zones aqueuses de traitement ainsi que dans des zones de séchage en aval du procédé d'extrusion, et on effectue le découpage à longueur pour obtenir les différentes raclettes en caoutchouc (3), uniquement après l'exécution du traitement chimique complémentaire par voie humide (4), **caractérisé en ce qu'**à la suite du traitement chimique complémentaire par voie humide (4), on fait passer le cordon profilé (3) de raclette en caoutchouc d'une manière continue dans un dispositif de mesure (11) qui, de préférence en travaillant sur la base de la fluorescence X, mesure de façon continue le degré d'halogénation de la surface du caoutchouc.

2. Procédé selon la revendication 1, **caractérisé en ce qu'**on guide d'une manière continue le cordon profilé (3) de raclette de caoutchouc extrudé sans fin, dans une zone de traitement en aval du procédé d'extrusion, à travers un bain formé d'un liquide aqueux de traitement complémentaire basé sur un halogène, notamment formé par une solution aqueuse de brome ou un mélange brome-eau, et qu'on l'immerge complètement dans le bain.

3. Procédé selon l'une des revendications précédentes, **caractérisé en ce que** le signal de mesure du dispositif de mesure (11) est traité en tant que signal de régulation (12) pour le processus de traitement chimique complémentaire par voie humide.

4. Procédé selon la revendication 3, **caractérisé en ce qu'**en fonction du signal de mesure obtenu dans le dispositif de mesure (11), on modifie la durée du traitement chimique complémentaire par voie humide (4) et/ou la concentration du liquide de traitement chimique complémentaire par voie humide.

5. Procédé selon l'une des revendications précédentes, **caractérisé en ce qu'**après avoir subi le traitement chimique complémentaire par voie humide (4) et après avoir dépassé le dispositif de mesure (1), le cordon profilé (3) de raclette en caoutchouc extrudé sans fin est guidé continûment, pour l'analyse de la qualité du traitement complémentaire, à travers une zone d'enduction (13), dans laquelle le cordon profilé (3) de raclette en caoutchouc est recouvert continûment, avant d'être découpé à longueur pour former les différentes raclettes en caoutchouc terminées (15), par un matériau réduisant le frottement, notamment une laque favorisant le glissement, au moyen d'une application par projection ou immersion.
